# EUROPÄISCHE PATENTANMELDUNG

(11) **EP 3 213 866 A1**
(43) Veröffentlichungstag der Anmeldung: **06.09.2017**
(21) Anmeldenummer: 17000160.6
(22) Anmeldetag: 26.01.2017
(51) Int. Cl.: B23Q 11/00

(54) **SCHMUTZSAMMELBEHÄLTER**

(30) Priorität: 04.02.2016 DE 202016000754 U
(71) Anmelder: Rocket Retail GmbH, 49074 Osnabrück (DE)
(72) Erfinder: FINGER, Felix, 49086 Osnabrück (DE); FÜHRER, Marcel, 49082 Osnabrück (DE)
(74) Vertreter: Pott, Ulrich

(57) **Zusammenfassung**

Die Erfindung betrifft einen Schmutzauffangbehälter 1 zur insbesondere Verwendung bei handwerklichen Arbeiten, mit einem von Wandungen 2, 3, 5 begrenzten Schmutzaufsammelraum, wobei der Schmutzaufsammelraum einen oberseitigen Kragen 4 hat, der sich an eine Rückwand 5 des Schmutzsammelraumes anschließt und über den der Behälter 1 an einer Haltefläche festlegbar ist (Fig. 1).

## Beschreibung

Die Erfindung bezieht sich auf einen Schmutzsammelbehälter mit einem von Wandungen begrenzten Schmutzsammelraum.

Bei vielen Arbeiten des täglichen Bedarfs fallen Schmutzreste an, die nur durch aufwendige Nachsäuberungsarbeiten wieder zu entfernen sind. Vielfach erfordert dies auch Werkzeuge, die für diese Säuberungsarbeiten zu bevorraten sind wie Kehrbleche, so dass es wünschenswert ist, einen Schmutzsammelbehälter zur Verfügung zu haben, der den bei z.B. handwerklichen Tätigkeiten anfallenden Schmutz an Ort und Stelle aufnimmt.

Es ist Aufgabe der vorliegenden Erfindung, einen Schmutzsammelbehälter der eingangs genannten Art zu schaffen, der platzsparend bevorratet werden kann und der so zu nutzen ist, dass z.B. bei handwerklichen Arbeiten der anfallende Schmutz gleich in den Schmutzsammelbehälter zu entsorgen ist.

Zur Lösung dieser Aufgabe zeichnet sich der Schmutzsammelbehälter dadurch aus, dass der Schmutzaufsammelraum einen oberseitigen Kragen hat, der sich an eine Rückwand des Schmutzssammelraumes anschließt und über den der Behälter an einer Haltefläche festlegbar ist.

Damit ist ein Schmutzsammelbehälter zur Verfügung gestellt, der bei durchzuführenden handwerklichen Arbeiten entnommen werden kann, beispielsweise über aufklappbare oder auffaltbare Wandungen so aufzufalten ist, dass eine Auffangöffnung entsteht und der mit seinem an der rückseitigen Wandung emporragenden Kragen an einer Haltefläche, z.B. einer Wand, zu befestigen ist, bevorzugtermaßen zu verkleben ist nach Ablösung einer Abdeckung einer Selbstklebefläche, wonach das Bohrwerkzeug zum Bohren eines Loches z.B. in einer Wand eines Gebäudes direkt in den Kragen des Schmutzbehälters hinein so platziert ist, dass der anfallende Bohrstaub bzw. anfallende Stein- und Mauerreste direkt über die Schmutzsammelbehälteröffnung in den Schmutzsammelbehälter gelangen.

Ein solcher Beutel kann beispielsweise auch genutzt werden, um an Stirnkanten einer Tischfläche befestigt zu werden, um beispielsweise Schmutzpartikel, die auf einer Tisch- oder Arbeitsfläche gelegen sind, direkt in diesen Schmutzbehälter hinein zu bringen bzw. zu fliegen.

Bei dem Schmutzauffangbehälter kann es sich um einen solchen handeln, der aus einem recyclebaren papiernen Material besteht. An dem rückwärtigen Kragen kann eine Skalierung, beispielsweise in Millimeter- und Zentimeterschritten vorgesehen sein mit einer Markierung zum Ansetzen eines Bohrwerkzeuges, um diesen Schmutzauffangbehälter auch gleich nach Art eines Maßbandes bzw. einer Messlatte nutzen zu können.

Der Schmutzauffangsammelbehälter kann derart gestaltet sein, dass er nach Art einer Tüte aufzufalten ist, so dass er platzsparend mit aufeinander gelegter Wandung als Flachpaket bevorratet werden kann. Dazu können auch Verkaufsgebinde aus z.B. 10 oder mehr Schmutzauffangbehältern im Handel angeboten werden.

Auch die vordere Wandung und auch z.B. dreieckförmige Seitenwandungen, bezogen auf den aufgeklappten Zustand, können einen auf- bzw. abklappbaren Rand haben, der mit entsprechenden Selbstklebebahnen versehen ist, die zum Beispiel von einer Folie im noch nicht benutzten Zustand abgedeckt sind. Sind Schmutzreste eingesammelt, kann die Abdeckfolie entfernt werden, so dass dann dieser Kragen mit dem sich an der Rückwand befindlichen Kragen zum Schließen des Behälters verbunden, d.h. verklebt werden, so dass dann der mit dem Schmutz befüllte Schmutzauffangsammelbehälter in einem geschlossenen Zustand zu entsorgen ist. Dies alles ist mit nur sehr wenigen Handgriffen zu vollziehen und erspart wesentliche, z.B. bei handwerklichen Arbeiten anfallende Nachsäuberungsarbeiten.

Zur weiteren Erläuterung der Erfindung wird auf weitere Unteransprüche, die nachfolgende Beschreibung und die Zeichnung verwiesen. In der Zeichnung zeigen:
- Fig. 1: eine Vorderansicht auf ein Ausführungsbeispiel eines Schmutzauffangbehälters in seinem Ursprungszustand vor der Benutzung;
- Fig. 2: das Ausführungsbeispiel nach Fig. 1 in einer Ansicht von hinten;
- Fig. 3: das Ausführungsbeispiel nach den Fig. 1 und 2 in einer Schrägansicht von der Seite;
- Fig. 4: in einer perspektivischen Darstellung das Ausführungsbeispiel nach den Fig. 1 bis 3 während seiner Benutzung bei Bohrarbeiten;
- Fig. 5: das Ausführungsbeispiel nach den Fig. 1 bis 4 in einer perspektivischen Schrägansicht von vorn im geöffneten Zustand beim Ablösen einer Abdeckung einer seitlichen und vorderseitigen Klebeschicht.

In der Zeichnung sind übereinstimmende Teile mit übereinstimmenden Bezugsziffern versehen.

Allgemein mit 1 ist der Schmutzauffangbehälter beziffert, der eine Vorderwand 2, einen klappbaren vorderen Rand 3 und einen rückwärtigen Rand 4 aufweist, der integraler Bestandteil der Rückwand 5 oder ein aufklappbarer und abklappbarer Teil dieser Rückwand ist.

Zur Vorderwand 2 hingerichtet hat dieser rückwärtige Kragen 4 eine Skalierung 6, eine Markierung 7 zum Ansetzen eines Bohrwerkzeuges. An seiner Rückseite ist bereichsweise dieser Kragen 4 mit einer Selbstklebeschicht versehen, die vor Gebrauch mit einer Abdeckung versehen ist in z.B. Gestalt einer Abdeckfolie, die für die Benutzung abgelöst werden kann.

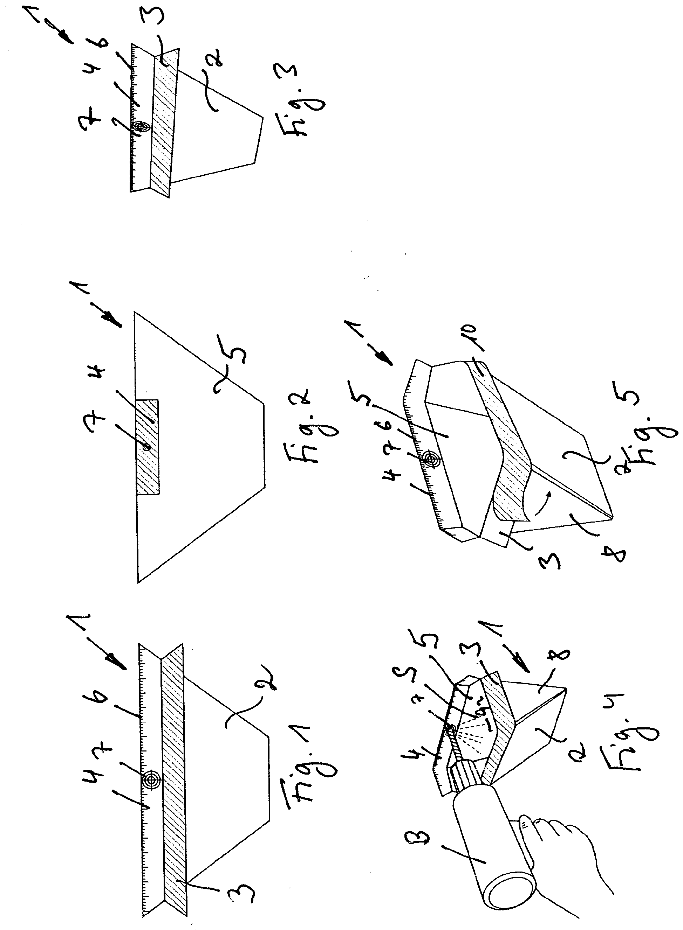

In Fig. 1 ist näher dargestellt, wie der Behälter im praktischen Einsatz genutzt wird, indem dort ein Bohrwerkzeug B dabei ist, ein Loch in eine Wand zu bohren, wobei Schmutzpartikel S anfallen. Der Schmutzauffangbehälter befindet sich in einem geöffneten Zustand, in dem die Seitenwände 8 und die Vorderwand 2 aufgefaltet sind, so dass sie eine Öffnung 9 zur Rückwand 5 freigeben. Der Kragen 4 ist mit der Wand verklebt. Der Bohrer des Bohrwerkzeuges B greift an der Markierung 7 an, die sich im Bereich der Selbstklebefläche befindet (Fig. 2), so dass der Schmutz S direkt in den Aufnahmeraum des Schmutzsammelbehälters 1 gelangt. In Fig. 5 ist noch angedeutet, dass für einen späteren Verschließvorgang der vordere Kragen 3 ebenfalls mit einer Klebefläche versehen sein kann, die von einer Abdeckung 10 bedeckt ist, die in Fig. 5 gerade abgelöst wird. Dann kann der Beutel mit seinen Seitenwandungen 8 der Vorderwand 2 in Richtung auf die Rückwand 5 mit dem Kragen 4 befestigt werden, so dass die Klebeflächen mit dem Kragen 4 zum Verschließen des Schmutzsammelbehälters verklebt werden kann.

## Patentansprüche

1. Schmutzauffangbehälter (1) zur insbesondere Verwendung bei handwerklichen Arbeiten, mit einem von Wandungen (2, 3, 5) begrenzten Schmutzaufsammelraum, **dadurch gekennzeichnet, dass** der Schmutzaufsammelraum einen oberseitigen Kragen (4) hat, der sich an eine Rückwand (5) des Schmutzsammelraumes anschließt und über den der Behälter (1) an einer Haltefläche festlegbar ist.

2. Schmutzauffangbehälter (1) nach Anspruch 1, **dadurch gekennzeichnet, dass** der Kragen (4) an einer Haltefläche festklebbar ist.

3. Schmutzauffangbehälter (1) nach Anspruch 2, **dadurch gekennzeichnet, dass** der Kragen (4) an seiner der Schmutzauffangöffnung (9) abgewandten Seite mit einer Klebefläche (1) versehen ist, die vor der Benutzung des Schmutzauffangbehälters (1) von einer Abdeckfolie belegt ist.

4. Schmutzauffangbehälter (1) nach einem der Ansprüche 1 bis 3, **dadurch gekennzeichnet, dass** der Kragen (4) eine Skalierung aufweist.

5. Schmutzauffangbehälter (1) nach einem der Ansprüche 1 bis 4, **dadurch gekennzeichnet, dass** der Schmutzauffangbehälter (1) als Auffangbehälter für bei handwerklichen Arbeiten anfallenden Schmutz wie Bohrrückstände ausgebildet ist.

6. Schmutzauffangbehälter (1) nach einem der Ansprüche 1 bis 5, **dadurch gekennzeichnet, dass** der sich an die Rückwandung (5) anschließende Kragen (1) mit einer Markierung (7) zum Ansetzen eines Bohrwerkzeuges versehen ist.

7. Schmutzauffangbehälter (1) nach einem der Ansprüche 1 bis 6, **dadurch gekennzeichnet, dass** der Schmutzauffangbehälter (1) unter Freigabe einer Auffangöffnung (9) aufklappbar oder auffaltbar ausgebildet ist.

8. Schmutzauffangbehälter (1) nach Anspruch 7, **dadurch gekennzeichnet, dass** der Schmutzauffangbehälter (1) im aufgefalteten Zustand im Wesentlichen dreieckförmige Seitenwandungen (8) hat.

9. Schmutzauffangbehälter (1) nach einem der Ansprüche 1 bis 8, **dadurch gekennzeichnet, dass** der Schmutzauffangbehälter (1) in den Schmutzauffangsammelraum begrenzenden Seiten-(8) und/oder Vorderwandung (4) ebenfalls einen klapp- oder faltbaren Kragen (3) hat, der im benutzten Zustand des zum Verschließen der Schmutzauffangsammelöffnung (9) mit dem an der Rückwand (5) vorgesehenen Kragen (4) verbindbar ist.

10. Schmutzauffangbehälter (1) nach Anspruch 9, **dadurch gekennzeichnet, dass** der Kragen (3) mit dem Kragen der Rückwand verklebbar ist und im unbenutzten Zustand eine die Klebefläche abschließende und für den Gebrauch lösbare Abdeckung (10) aufweist.
